(19) Europäisches Patentamt
European Patent Office
Office européen des brevets

(11) **EP 3 508 763 A1**

(12) **EUROPEAN PATENT APPLICATION**
published in accordance with Art. 153(4) EPC

(43) Date of publication:
**10.07.2019 Bulletin 2019/28**

(51) Int Cl.:
**F16J 15/34** (2006.01)

(21) Application number: **17846312.1**

(22) Date of filing: **25.08.2017**

(86) International application number:
**PCT/JP2017/030432**

(87) International publication number:
**WO 2018/043307 (08.03.2018 Gazette 2018/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.09.2016 JP 2016171322**

(71) Applicant: **Eagle Industry Co., Ltd.**
**Minato-ku**
**Tokyo 105-8587 (JP)**

(72) Inventors:
• **HOSOE Takeshi**
**Tokyo 105-8587 (JP)**
• **INOUE Hideyuki**
**Tokyo 105-8587 (JP)**
• **NEGISHI Yuta**
**Tokyo 105-8587 (JP)**
• **TOKUNAGA Yuichiro**
**Tokyo 105-8587 (JP)**

(74) Representative: **TBK**
**Bavariaring 4-6**
**80336 München (DE)**

(54) **SLIDING COMPONENT**

(57) Sliding characteristics in a wide range of bearing characteristic numbers at a sliding face are improved. A plurality of dimples 10 is of substantially the same opening diameter, and is provided independently of each other. The ratio between the depth h and the diameter D of the dimples 10 is set in a range of 1/500 to 1/10. The dimples 10 are arranged randomly such that the area ratio of the dimples 10 within a 120° unit angle in a circumferential direction of a sliding face S is in a range of 8% to 50%.

FIG. 2

EP 3 508 763 A1

**Description**

Technical Field

The present invention relates to sliding components suitable, for example, for mechanical seals, bearings, and other sliding units. More particularly, the present invention relates to sliding components for seal rings, bearings, or the like that require a reduction of friction by interposing fluid between sliding faces, and prevention of leakage of the fluid from the sliding faces.

Background Art

In order for a mechanical seal, an example of a sliding component, to maintain sealing performance for the long term, it must satisfy two conflicting conditions of "sealing" and "lubrication." In particular, in recent years, for environmental measures or the like, there has been an increasing demand for a further friction reduction to reduce mechanical loss while preventing leakage of a sealed fluid. As a friction reduction technique, various textures are provided on sliding faces to achieve these. For example, known as one of the textures is the arrangement of dimples on a sliding face.
For example, the invention described in JP 11-287329 A (hereinafter, referred to as "Patent Document 1") forms a large number of dimples of different depths on a sliding face so that load capacity by fluid bearing pressure produced in fluid interposed between the sliding face and the opposing sliding face during sliding decreases in some dimples but increases in the other dimples with a change in fluid temperature. Thus, the load capacity is stabilized, providing an effect of maintaining good sliding characteristics at all times regardless of temperature changes.
The invention described in JP 2000-169266 A (hereinafter, referred to as "Patent Document 2") forms a sliding face with a hard coating evaporatively deposited on the surface of a substrate made of a sintered ceramic material, and provides a large number of dimples on the sliding face, thereby to improve wear resistance and improve liquid lubricity by the dimples.

CITATION LIST

PATENT DOCUMENTS

Patent Document 1: JP 11-287329 A
Patent Document 2: JP 2000-169266 A

SUMMARY OF THE INVENTION

Problem to be Solved by the Invention

The invention described in Patent Document 1, however, focuses on the depth of dimples provided on a sliding face for maintaining good sliding characteristics at all times regardless of temperature changes, and does not consider the effects of the ratio between the opening diameter and the depth of the dimples and the area ratio of the dimples on sliding characteristics (friction coefficient reduction).
The invention described in Patent Document 2, which provides dimples on a sliding face to improve liquid lubricity, also does not consider the effects of the ratio between the opening diameter and the depth of the dimples and the area ratio of the dimples on sliding characteristics (friction coefficient reduction), like Patent Document 1.
It is an object of the present invention to provide a sliding component that can improve sliding characteristics in a wide range of bearing characteristic numbers at a sliding face by setting the ratio between the opening diameter and the depth of dimples provided on the sliding face in a predetermined range and randomly disposing the dimples such that the area ratio of the dimples is in a predetermined range.

Means for Solving Problem

To attain the above object, a sliding component according to a first aspect of the present invention is a sliding component including a pair of sliding parts each having an annular sliding face to relatively slide on each other, at least one of the sliding faces having a plurality of dimples disposed thereon, in which the plurality of dimples is of substantially the same opening diameter and provided independently of each other, a ratio between a depth h and an opening diameter D of the dimples is set in a range of 1/500 to 1/10, and the dimples are arranged randomly such that an area ratio of the dimples within a 120° unit angle in a circumferential direction of the sliding face is in a range of 8% to 50%.

According to this aspect, the sliding characteristics can be improved in a wide range of bearing characteristic numbers at the sliding face.

Further, the plurality of dimples is of substantially the same opening diameter, thus facilitating the formation of the dimples.

Furthermore, by setting the area ratio of the dimples within a 120° unit angle in a circumferential direction of the sliding face in a range of 8% to 50%, when SiC or carbon is used as the material of the sliding part, the area ratio of the dimples can be optimized, and even when porous SiC is used as the material of the sliding part, continuous connection between pores can be prevented.

According to a second aspect of the present invention, in the sliding component in the first aspect, the ratio between the depth h and the diameter D of the dimples is set in a range of 1/400 to 1/20.

According to this aspect, the sliding characteristics can be further improved in a wide range of bearing characteristic numbers at the sliding face.

According to a third aspect of the present invention, in the sliding component in the first or second aspect, the dimples are arranged randomly such that the area ratio of the dimples within a 120° unit angle in a circumferential direction of the sliding face is in a range of 35% to 45%.

According to this aspect, when the material of the sliding part is SiC or carbon, leakage can be minimized.

According to a fourth aspect of the present invention, in the sliding component in any one of the first to third aspects, the plurality of dimples is set to about 0.5 $\mu$m in depth.

According to this aspect, the sliding characteristics at low speeds can be improved.

According to a fifth aspect of the present invention, in the sliding component in any one of the first to fourth aspects, the plurality of dimples is set to about 100 $\mu$m in opening diameter.

According to this aspect, the friction coefficient can be reduced in a range of values of a bearing characteristic number G exceeding $7.6 \times 10^{-8}$.

According to a sixth aspect of the present invention, in the sliding component in any one of the first to fifth aspects, in a relationship between a friction coefficient and a bearing modulus G (viscosity $\times$ speed/load) which are obtained by a rotational sliding test, the bearing modulus G (viscosity $\times$ speed/load) is set to be in a range of $2 \times 10^{-9}$ to $3 \times 10^{-7}$.

According to this aspect, a fluid lubrication transition point (Gc point) falls in this range. Thus the friction coefficient is reduced, and boundary lubrication can be prevented.


Effect of the Invention

The present invention achieves the following outstanding effects.

(1) The plurality of dimples is of substantially the same opening diameter and provided independently of each other, the ratio between the depth h and the opening diameter D of the dimples is set in a range of 1/500 to 1/10, and the dimples are arranged randomly such that the area ratio of the dimples within a 120° unit angle in a circumferential direction of the sliding face is in a range of 8% to 50%, so that the sliding characteristics can be improved in a wide range of bearing characteristic numbers at the sliding face.

Further, the plurality of dimples is of substantially the same opening diameter, thus facilitating the formation of the dimples.

Furthermore, by setting the area ratio of the dimples within a 120° unit angle in a circumferential direction of the sliding face in a range of 8% to 50%, when SiC or carbon is used as the material of the sliding part, the area ratio of the dimples can be optimized, and even when porous SiC is used as the material of the sliding part, continuous connection between pores can be prevented.

(2) The ratio between the depth h and the diameter D of the dimples is set in a range of 1/400 to 1/20, so that the sliding characteristics can be further improved in a wide range of bearing characteristic numbers at the sliding face.

(3) The dimples are arranged randomly such that the area ratio of the dimples within a 120° unit angle in a circumferential direction of the sliding face is in a range of 35% to 45%, so that when the material of the sliding part is SiC or carbon, leakage can be minimized.

(4) The plurality of dimples is set to about 0.5 $\mu$m in depth, so that the sliding characteristics at low speeds can be improved.

(5) The plurality of dimples is set to about 100 $\mu$m in opening diameter, so that the friction coefficient can be reduced in a range of values of the bearing characteristic number G exceeding $7.6 \times 10^{-8}$.

(6) In the relationship between the friction coefficient and the bearing modulus G (viscosity $\times$ speed/load) which are obtained by the rotational sliding test, the bearing modulus G (viscosity $\times$ speed/load) is set to be in a range of $2 \times 10^{-9}$ to $3 \times 10^{-7}$, so that the fluid lubrication transition point (Gc point) falls in this range. Thus the friction coefficient is reduced, and boundary lubrication can be prevented.

BRIEF DESCRIPTION OF THE DRAWINGS

FIG. 1 is a vertical cross-sectional view showing an example of a mechanical seal according to a first embodiment of the present invention.

FIG. 2A is a plan view for explaining an example of a sliding face of a sliding part according to the first embodiment of the present invention.

FIG. 2B is an enlarged cross-sectional view taken along line A-A in FIG. 2A.

FIG. 2C is an enlarged cross-sectional view taken along line B-B in FIG. 2A.

FIG. 3 is an explanatory diagram for explaining the function of a dimple.

FIG. 4 is an enlarged plan view of a part of the sliding face of the sliding part according to the first embodiment of the present invention.

FIG. 5 is an explanatory diagram for explaining the depth of a dimple in the present invention.

FIG. 6 is a reference diagram illustrating the relationship between a friction coefficient and a bearing characteristic number G which are obtained by a rotational sliding test.

FIG. 7 is a schematic cross-sectional view illustrating a testing machine capable of measuring sliding torque used in the test.

DESCRIPTION OF EMBODIMENTS

Hereinafter with reference to the drawings, a mode for carrying out this invention will be described illustratively based on an embodiment. However, the dimensions, materials, shapes, relative positions, and others of components described in the embodiment are not intended to limit the scope of the present invention only to them unless otherwise described explicitly.

Embodiment

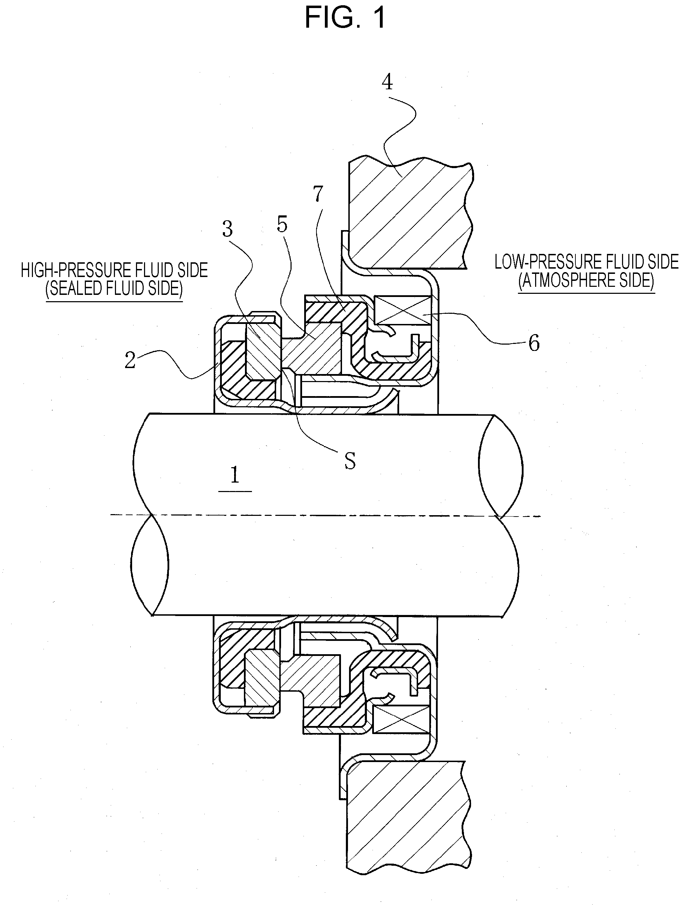

With reference to FIGS. 1 to 5, a sliding component according to a first embodiment of the present invention will be described.

The following embodiment describes as an example a mechanical seal that is an example of the sliding component. The present invention is not limited to this, and can be used as a bearing sliding part that slides on a rotating shaft while sealing lubricating oil on one axial side of a cylindrical sliding face.

The outer-peripheral side of sliding parts constituting the mechanical seal is described as the high-pressure fluid side (sealed fluid side), and the inner-peripheral side as the low-pressure fluid side (atmosphere side). The present invention is not limited to this, and is applicable to the case where the high-pressure fluid side and the low-pressure fluid side are reversed.

FIG. 1 is a vertical cross-sectional view showing an example of the mechanical seal, which is an inside mechanical seal in a form of sealing a sealed fluid on the high-pressure fluid side that tends to leak from the outer periphery toward the inner periphery of sliding faces. The mechanical seal is provided with an annular rotating-side seal ring 3 that is one sliding part provided via a sleeve 2 at a rotating shaft 1 to drive a pump impeller (not shown) on the high-pressure fluid side, in a state of being integrally rotatable with the rotating shaft 1, and an annular stationary-side seal ring 5 that is the other sliding part provided at a pump housing 4 in non-rotating and axially movable states. The rotating-side seal ring 3 and the stationary-side seal ring 5 slide in close contact with each other at sliding faces S mirror-finished by lapping or the like, with a coiled wave spring 6 and a bellows 7 for axially energizing the stationary-side seal ring 5. That is, the mechanical seal prevents, at each other's sliding faces S of the rotating-side seal ring 3 and the stationary-side seal ring 5, the sealed fluid from flowing out from the outer periphery of the rotating shaft 1 to the atmosphere side.

FIG. 1 shows a case where the width of the sliding face of the rotating-side seal ring 3 is wider than the width of the sliding face of the stationary-side seal ring 5. The present invention is not limited to this, and is also applicable to the opposite case as a matter of course.

The material of the rotating-side seal ring 3 and the stationary-side seal ring 5 is selected from silicon carbide (SiC) excellent in wear resistance, carbon excellent in self-lubricity, and the like. For example, both may be SiC, or a combination of the rotating-side seal ring 3 being SiC and the stationary-side seal ring 5 being carbon is possible.

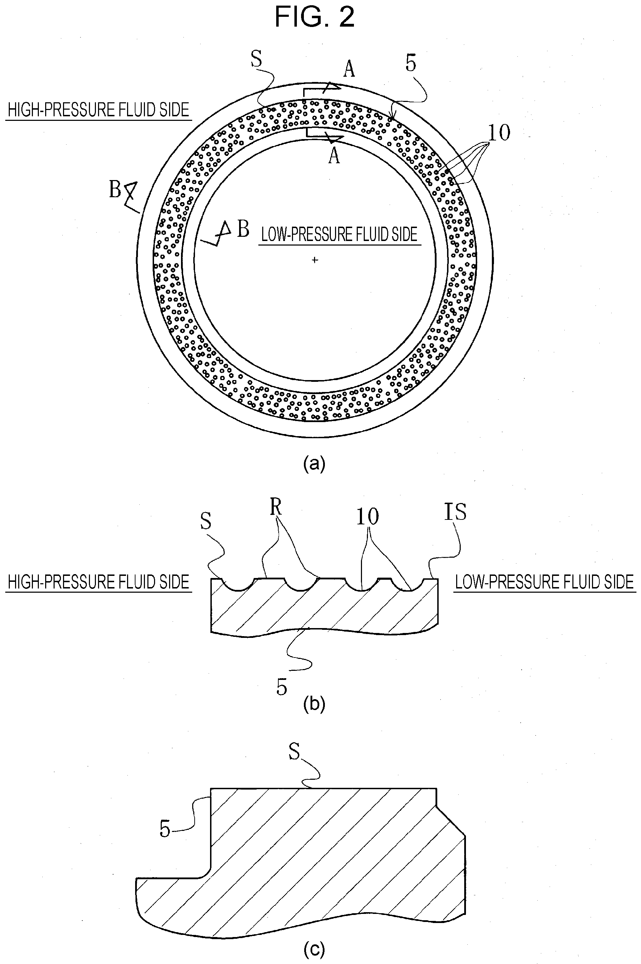

As shown in FIG. 2A, on the sliding face of at least one of the rotating-side seal ring 3 and the stationary-side seal ring 5 that slide relatively, dimples 10 are arranged randomly.

In this example, a plurality of dimples 10 is arranged on the sliding face S of the stationary-side seal ring 5. In this case, the rotating-side seal ring 3 may not be provided with or may be provided with dimples. When provided on the rotating-side seal ring 3, dimples are desirably provided the same (in size and ratio) as the dimples 10 provided on the sliding face S of the stationary-side seal ring 5.

In the illustrated example, a cross-sectional shape of the stationary-side seal ring 5 is a protruding shape as shown in FIG. 2C, and its top face constitutes a flat sliding face S. On the sliding face S, a large number of dimples 10 as shown in FIGS. 2A and 2B are spaced by a land R (flat portion) to be provided independently of each other. These dimples 10 are provided circumferentially and radially all over the sliding face S.

The dimples 10 may communicate with the high-pressure fluid side in the radial direction of the sliding face S, but are separated from the low-pressure fluid side by a flat sealing face IS.

This example shows a case where the dimples 10 are provided circumferentially continuously. This is not limiting, and the dimples 10 may be provided circumferentially intermittently.

In the present invention, a "dimple" is a hollow formed on the flat sliding face S, and is not limited to a particular shape. For example, the planar shape of the hollow includes a circle, an ellipse, an oval, and a rectangle, and the cross-sectional shape of the hollow includes various shapes such as a bowl shape and a square.

The large number of dimples 10 formed on the sliding face S have the function of holding part of liquid entering as a hydrodynamic lubricating liquid film between the sliding face S and the opposing sliding face that slides relatively to the sliding face S, thereby stabilizing the lubricating liquid film.

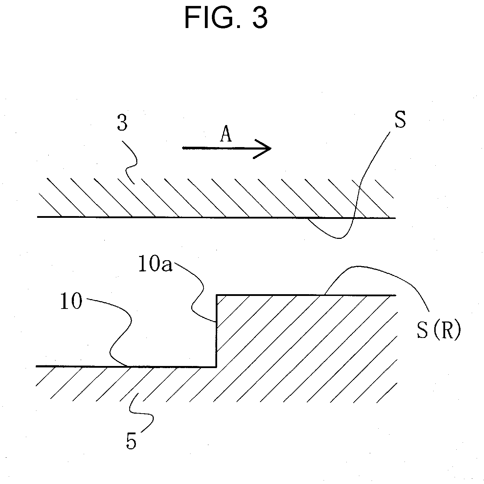

The individual dimples 10 can be considered to constitute a Rayleigh step as shown in FIG. 3.

In FIG. 3, a Rayleigh step 10a extending in a direction orthogonal to a cross section of the figure is formed on the sliding face S(R) of the stationary-side seal ring 5, and the sliding face S of the rotating-side seal ring 3 is flattened. When the rotating-side seal ring 3 relatively moves in a direction shown by an arrow, fluid interposed between the two sliding faces tends to follow and move in the arrow direction due to its viscosity. At that time, dynamic pressure (positive pressure) is generated by the existence of the Rayleigh step 10a. By the generation of the dynamic pressure, the lubricating liquid film between the sliding faces is increased, improving lubrication performance. While the lubrication performance is improved by the dynamic pressure effect, there is concern that the leakage rate increases. If the amount of dimples is reduced to thin the lubricating liquid film to reduce the leakage rate, the sliding faces S tend to contact each other, causing wear.

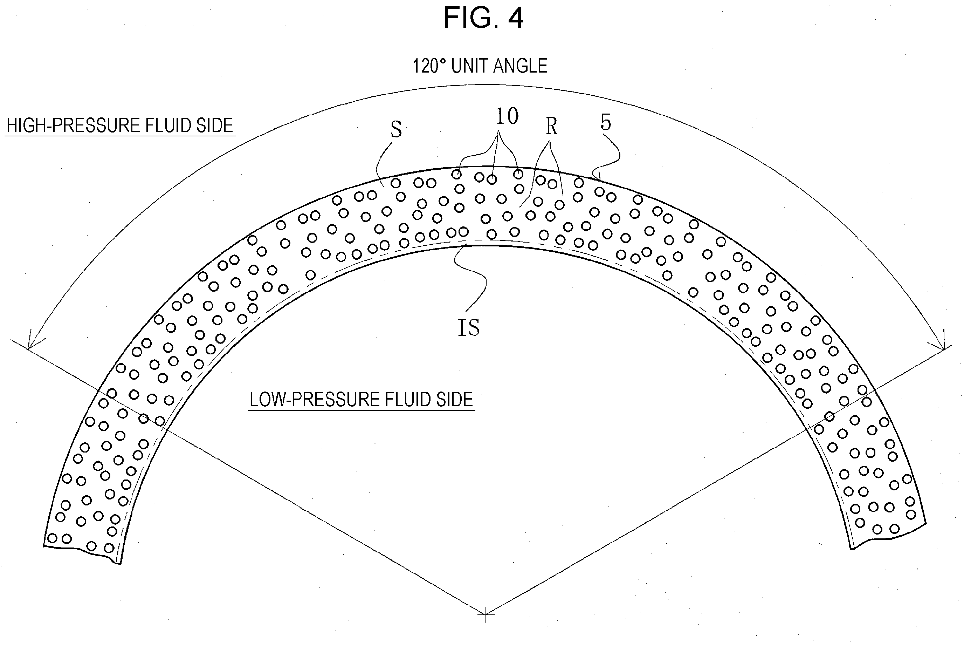

FIG. 4 is an enlarged plan view of a part of the sliding face S of the stationary-side seal ring 5 shown in FIG. 2A.

In FIG. 4, the plurality of dimples 10 formed on the sliding face is provided independently of each other, and is disposed such that the plurality of circular dimples of substantially the same opening diameter is distributed randomly.

The plurality of circular dimples 10 is of substantially the same opening diameter, and is provided independently of each other. The ratio between the depth h and the diameter D of the dimples is preferably set in a range of 1/500 to 1/10 in terms of improving the sliding characteristics in a wide range of bearing characteristic numbers at the sliding face. Preferably, the ratio between the depth h and the diameter D of the dimples is in a range of 1/400 to 1/20, and more preferably, the ratio between the depth h and the diameter D of the dimples is in a range of 1/240 to 1/60.

The dimples shown in FIG. 4 are set to about 0.5 $\mu$m in depth h, and about 100 $\mu$m in opening diameter D. In this case, the ratio between the depth h and the opening diameter D of the dimples is 1/200.

For example, when h/D = 1/500 where the depth h of the dimples is set to 0.5 $\mu$m, D = 250 $\mu$m. When h/D = 1/10, D = 5 $\mu$m.

In the above description, about 0.5 $\mu$m refers to one within a range of 0.5 $\pm$ 10% $\mu$m, and likewise, about 100$\mu$m refers to one within a range of 100 $\pm$ 10% $\mu$m.

Evaluation results of a squeal test and a leakage test on sliding faces with varying ratios between the depth h and the diameter D of dimples are shown in Table 1.

Note that one sliding part was made from silicon carbide (SiC), and the other carbon.

[Table 1]

| DIMPLE ARRANGEMENT | RANDOM | | | | STAGGERED |
|---|---|---|---|---|---|
| DIMPLE DEPTH h/DIAMETER D | 1/60 | 1/100 | 1/200 | 1/240 | 1/200 |
| SQUEAL TEST | GOOD (NO) | GOOD (NO) | GOOD (NO) | GOOD (NO) | FAIR (SMALL) |
| LEAKAGE TEST | GOOD (NO) | GOOD (NO) | GOOD (NO) | GOOD (NO) | GOOD (NO) |

The results in Table 1 show that with the ratio between the depth h and the diameter D of the dimples at least in a range of 1/60 to 1/240, the sliding face is good in both squealing and leakage.

According to a study by the inventors of the present invention, it has been confirmed that the shallower the depth h of the dimples, the lower G side the fluid lubrication transition point shifts to, and the deeper the depth h, the higher revolution side the fluid lubrication transition point shifts to, and the higher number of revolutions is required to maintain fluid lubrication.

In the present invention, the opening diameter D of the dimples is a mean value of a "largest-diameter portion" and a "smallest-diameter portion" along a boundary line between an unworked surface and a worked surface. For one whose boundary between an unworked surface and a worked surface cannot be visually checked, a position in which its shape changes in the depth direction by 0.05 $\mu$m or more except the surface roughness of the sliding face S, or a position in which its shape changes in the depth direction by 1/10 or more of the depth of the deepest portion of the dimple except the surface roughness of the sliding face S is taken as a boundary between an unworked surface and a worked surface.

Substantially the same opening diameter D means one within a range of ±10% of a design value of the opening diameter. For the opening diameter when the shape of a dimple is other than a circle, for example, an ellipse, an oval, or a rectangle, the following equivalent diameter is used for the sake of convenience.

```
Equivalent diameter = 4 × (dimple cross-sectional
area/dimple circumferential length)
```

For example, when the dimple is a square with one side a in length, equivalent diameter = $4a^2/4a = a$.

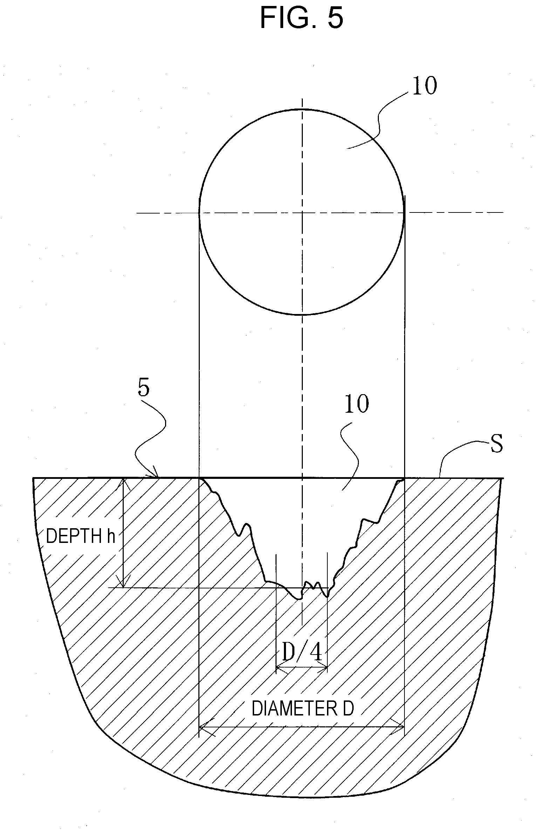

Next, with reference to FIG. 5, the depth h of the dimples 10 is described.

When a cross-sectional shape of a dimple 10 is a shape as shown in FIG. 5, a mean position within a range of D/4 from the center of a worked surface is calculated, and a height dimension from the calculated position to an unworked surface is taken as the depth h of the dimple 10.

Next, with reference to FIG. 4, the random distribution of the plurality of dimples 10 is described.

As shown in FIG. 4, the plurality of circular dimples 10 of substantially the same opening diameter is arranged to be randomly distributed in the circumferential and radial directions of the sliding face S, and is set such that the area ratio of the dimples 10 within a 120° unit angle in a circumferential direction of the sliding face S (the sum of the areas of all the dimples/the area of the sliding face) is in a range of 8% to 50%.

The area ratio of the dimples 10 is set to a proper value depending on the sealing pressure of the sliding face S. For example, the area ratio is desirably set by performing a rotation test on the sliding part based on a sealing pressure, and checking the leakage rate under the sealing pressure.

The area ratio of the dimples 10 needs to be set depending on the material of the sliding part. For example, when the material is porous SiC, an area ratio of the dimples 10 of about 8% is proper because if it is 10% or more, pores can be continuously connected to each other.

Evaluation results of a leakage (minute amount of leakage) test, a squeal test, and a torque test on sliding faces with varying area ratios of the dimples 10 are shown in Table 2.

Note that one sliding part was made from silicon carbide (SiC), and the other carbon.

[Table 2]

| DIMPLE DIAMETER D ($\mu$m) | 100 | | | | |
|---|---|---|---|---|---|
| DIMPLE DEPTH h ($\mu$m) | 0.5 | | | | |
| DIMPLE ARRANGEMENT | RANDOM | | | | |
| DIMPLE AREA RATIO (%) | 10 | 20 | 30 | 40 | 50 |
| LEAKAGE (MINUTE AMOUNT OF LEAKAGE) TEST | EXCELLENT (NO) | GOOD (NO) | GOOD (NO) | GOOD (NO) | FAIR (SMALL) |
| SQUEAL TEST | POOR (OCCURRED) | POOR (OCCURRED) | POOR (OCCURRED) | GOOD (NO) | GOOD (NO) |
| TORQUE TEST | FAIR (MEDIUM) | FAIR (MEDIUM) | GOOD (LOW) | GOOD (LOW) | GOOD (LOW) |

The results in Table 2 show that in terms of leakage, squealing, and torque, the sliding face S is good with the area ratio of the dimples 10 within a 120° unit angle in a circumferential direction of the sliding face S in a range of 35 to 45%.

Next, an example of a method of forming dimples on a sliding face is described as follows.

(1) Determine the positions of holes to be made in a metal mask using random numbers.

(2) Make holes in the determined positions in the metal mask by laser beam machining or the like.

(3) Place the metal mask in which the holes are randomly made on a sliding face of a sliding part to be worked on.

(4) Form dimples on the sliding face by irradiating it with a femtosecond laser from above the metal mask, ion etching, or the like using the holes in the metal mask. On the sliding face, dimples of the same opening diameter are disposed uniformly with a predetermined distribution.

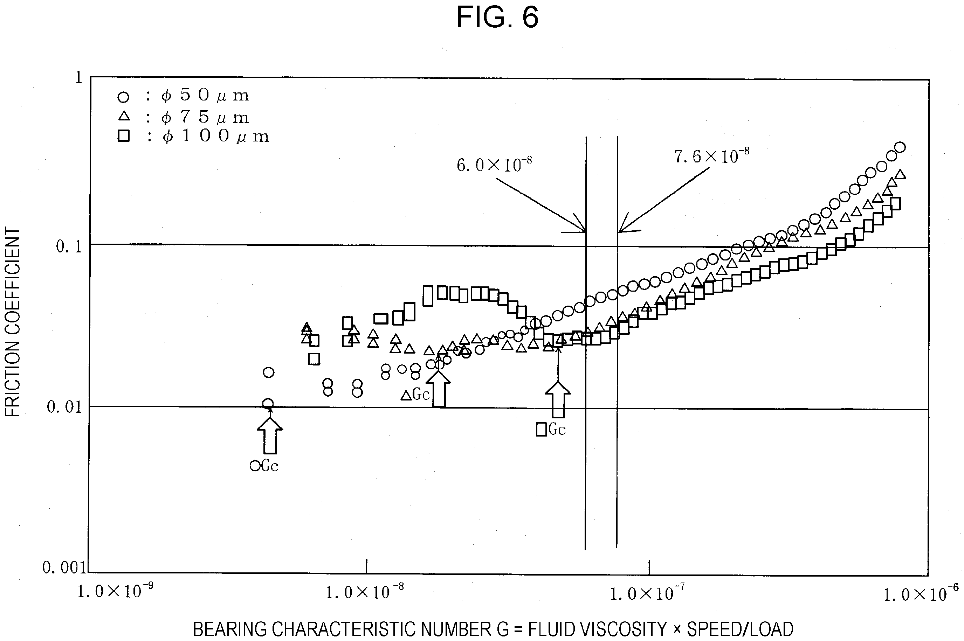

FIG. 6 is a reference diagram showing the relationship between a friction coefficient and a bearing characteristic number G which are obtained by a rotational sliding test.

The inner diameter of sliding faces of sliding parts used in the rotational sliding test was $\varphi$18 mm, the width of the sliding faces was 1.8 mm, the dimple area ratio was 40%, the depth h of all dimples was 0.1 $\mu$m, and the sliding faces have dimples of three opening diameters D, $\varphi$50 $\mu$m (h/D = 1/500), $\varphi$75 $\mu$m (h/D = 1/750), and $\varphi$100 $\mu$m (h/D = 1/1000), respectively.

Test conditions of the rotational sliding test were as in Table 3 below.

[Table 3]

| SLIDING MATERIAL COMBINATION | SiC (DIMPLE-WORKED) $\times$ SiC (UNWORKED) |
| --- | --- |
| MOUNTING LOAD | 25 N |
| CIRCUMFERENTIAL SPEED | 0.0 m/sec $\rightarrow$ 10.0 m/sec |
| PRESSURE | 0.15 MPaG (OUTER-PERIPHERAL SIDE) |
| TEMPERATURE | 60°C |
| SEALING FLUID | JIS K2234LLC 50% AQUEOUS SOLUTION |

In this test, no leaks from the sliding faces occurred during the test.

In FIG. 6, it is found that in the rpm range during the test, in examples with dimple opening diameters of $\varphi$50 $\mu$m, $\varphi$75 $\mu$m, and $\varphi$100 $\mu$m, the larger the opening diameter of the dimples, the lower the friction coefficient in a range of values of the bearing characteristic number G exceeding $7.6 \times 10^{-8}$. Further, it is found that there is a fluid lubrication transition point (hereinafter, referred to as a "Gc point") in each dimple opening diameter, and in the examples with $\varphi$50 $\mu$m, $\varphi$75 $\mu$m, and $\varphi$100 $\mu$m, the smaller the dimple opening dimeter, the lower G side the Gc point shifts to, and further the lower the friction coefficient at the Gc point.

According to the test results in FIG. 6, the following can be said.

(1) The larger the dimple opening diameter (the smaller the ratio of h/D) the lower the friction coefficient in a range of G values exceeding $7.6 \times 10^{-8}$.

(2) The smaller the dimple opening diameter (the larger the ratio of h/D), the lower G side the Gc point shifts to, and further, the lower the friction coefficient at the Gc point.

Referring to the relationship between the friction coefficient and the bearing modulus G (viscosity $\times$ speed/load) which are obtained by this rotational sliding test, it is found that when the bearing modulus G (viscosity $\times$ speed/load) is in a range of $2 \times 10^{-9}$ to $3 \times 10^{-7}$, the friction coefficient is low, 0.1 or less, the fluid lubrication transition point (Gc point) falls in this range, and boundary lubrication is avoided.

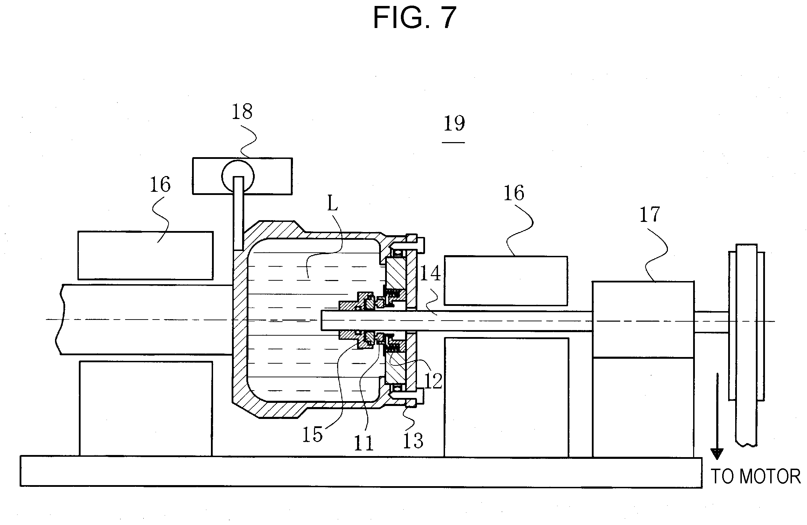

Next, with reference to FIG. 7, a testing machine 19 capable of measuring sliding torque used in this test is described.

A body portion of the testing machine 19 includes a casing 13 that supports a stationary ring 11 in a non-rotating state via a spring 12, a rotating shaft 14 rotatably extending through the inner periphery of the casing 13, and a rotating ring 15 that is supported on the outer periphery of the rotating shaft 14 and axially oppose the stationary ring 11. In a sealed space enclosed by the rotating ring 15, the casing 13, and the rotating shaft 14, a sealed liquid L is sealed.

The testing machine 19 is characterized in that hydrostatic gas bearings are used as bearing portions 16 on opposite sides to allow precise measurement of the sliding torque of the mechanical seal. The torque is measured in two ways, a torque meter 17 and a cantilever-type load cell 18, to eliminate measurement errors by double-checking.

The sliding component according to the embodiment of the present invention achieves the following especially outstanding effects.

(1) The plurality of dimples 10 is provided independently of each other. The ratio between the depth h and the diameter D of the dimples is set in a range of 1/500 to 1/10. The dimples 10 are randomly arranged such that the area ratio of the dimples 10 within a 120° unit angle in a circumferential direction of the sliding face S is in a range of 8% to 50%. Consequently, the sliding characteristics can be improved in a wide range of bearing characteristic numbers at the sliding face.

Further, the plurality of dimples 10 is of substantially the same opening diameter, thus facilitating the formation of the dimples 10.

Furthermore, by setting the area ratio of the dimples 10 within a 120° unit angle in a circumferential direction of the sliding face S in a range of 8% to 50%, when SiC or carbon is used as the material of the sliding part, the area ratio of the dimples 10 can be optimized, and even when porous SiC is used as the material of the sliding part, continuous connection between pores can be prevented.

(2) By the ratio between the depth h and the diameter D of the dimples being set in a range of 1/400 to 1/20, the sliding characteristics can be further improved in a wide range of bearing characteristic numbers at the sliding face. When the depth of the plurality of dimples is set to about 0.5 $\mu$m, and the opening diameter about 100 $\mu$m, the ratio between the depth h and the diameter D of the dimples is 1/200. Thus, the sliding characteristics can be further improved in a wide range of bearing characteristic numbers at the sliding face.

(3) When the material of the sliding part is SiC or carbon, there is no leakage with the area ratio of the dimples within a 120° unit angle in a circumferential direction of the sliding face in a range of 10% to 45%, and there are no squeals with the area ratio of the dimples in a range of 35% to 50%, and further, low torque is provided with the area ratio of the dimples in a range of 25% to 50%. Thus, the area ratio of the dimples is preferably in a range of 35% to 45%.

(4) When the depth of the plurality of dimples is set to about 0.5 $\mu$m, the sliding characteristics at low speeds can be improved. When the opening diameter of the plurality of dimples is set to about 100 $\mu$m, the friction coefficient can be reduced in a range of values of the bearing characteristic number G exceeding $7.6 \times 10^{-8}$. When the depth of the plurality of dimples is set to about 0.5 $\mu$m and the opening diameter about 100 $\mu$m, the ratio between the depth h and the diameter D of the dimples is 1/200. Thus, the sliding characteristics can be further improved in a wide range of bearing characteristic numbers at the sliding face.

(5) In the relationship between the friction coefficient and the bearing modulus G (viscosity $\times$ speed/load) which are obtained by the rotational sliding test, by setting the range of the bearing modulus G (viscosity $\times$ speed/load) to $2 \times 10^{-9}$ to $3 \times 10^{-7}$, the fluid lubrication transition point (Gc point) falls in this range. Thus the friction coefficient is reduced, and boundary lubrication can be prevented.

Although the embodiment of the present invention has been described above, a specific configuration thereof is not limited to the embodiment. Any changes and additions made without departing from the scope of the present invention are included in the present invention.

For example, the embodiment has described the case where a sliding part is used as at least one of a pair of rotating and stationary seal rings in a mechanical seal device. The present invention can also be used as a bearing sliding part that slides on a rotating shaft while sealing lubricating oil on one axial side of a cylindrical sliding face.

Further, for example, the embodiment has described the case where a high-pressure sealed fluid is present on the outer-peripheral side. The present invention is also applicable to the case where a high-pressure fluid is on the inner-peripheral side. In that case, dimples may be arranged to communicate with the inner-peripheral side.

Further, for example, the embodiment has described the case where a plurality of dimples is about 0.5 $\mu$m in depth h and about 100 $\mu$m in opening diameter D. These show one preferable example, and are not limiting. The ratio between the depth h and the diameter D of dimples only needs to be set in a range of 1/500 to 1/10.

Further, for example, the embodiment has described the case where 40% is selected as the area ratio of a plurality of dimples within a 120° unit angle in a circumferential direction of a sliding face, in terms of achieving both sealing and lubrication. This is not limiting. The area ratio of dimples within a 120° unit angle in a circumferential direction of a sliding face only needs to be in a range of 30% to 50%.

Reference Signs List

1    rotating shaft
2    sleeve
3    rotating-side seal ring
4    housing
5    stationary-side seal ring
6    coiled wave spring
7    bellows

| 10 | dimple |
|---|---|
| 19 | testing machine |
| 11 | stationary ring |
| 12 | spring |
| 13 | casing |
| 14 | rotating shaft |
| 15 | rotating ring |
| 16 | bearing portion |
| 17 | torque meter |
| 18 | load cell |
| S | sliding face |
| R | land |

**Claims**

1. A sliding component comprising a pair of sliding parts each having an annular sliding face to relatively slide on each other, at least one of the sliding faces having a plurality of dimples disposed thereon, wherein
the plurality of dimples is of substantially the same opening diameter and provided independently of each other, a ratio between a depth h and an opening diameter D of the dimples is set in a range of 1/500 to 1/10, and the dimples are arranged randomly such that an area ratio of the dimples within a 120° unit angle in a circumferential direction of the sliding face is in a range of 8% to 50%.

2. The sliding component according to claim 1, wherein the ratio between the depth h and the diameter D of the dimples is set in a range of 1/400 to 1/20.

3. The sliding component according to claim 1 or 2, wherein the dimples are arranged randomly such that the area ratio of the dimples within a 120° unit angle in a circumferential direction of the sliding face is in a range of 35% to 45%.

4. The sliding component according to any one of claims 1 to 3, wherein the plurality of dimples is set to about 0.5 $\mu$m in depth.

5. The sliding component according to any one of claims 1 to 4, wherein the plurality of dimples is set to about 100 $\mu$m in opening diameter.

6. The sliding component according to any one of claims 1 to 5, wherein in a relationship between a friction coefficient and a bearing modulus G (viscosity $\times$ speed/load) which are obtained by a rotational sliding test, the bearing modulus G (viscosity $\times$ speed/load) is set to be in a range of $2 \times 10^{-9}$ to $3 \times 10^{-7}$.

# FIG. 1

HIGH-PRESSURE FLUID SIDE
(SEALED FLUID SIDE)

LOW-PRESSURE FLUID SIDE
(ATMOSPHERE SIDE)

# FIG. 2

S   A   5

HIGH-PRESSURE FLUID SIDE

10

B

B   LOW-PRESSURE FLUID SIDE

A

+

(a)

S   R   10   IS

HIGH-PRESSURE FLUID SIDE   LOW-PRESSURE FLUID SIDE

5

(b)

S

5

(c)

# FIG. 3

FIG. 4

# FIG. 5

DEPTH h

D/4

DIAMETER D

FIG. 6

# FIG. 7

TO MOTOR

| **INTERNATIONAL SEARCH REPORT** | International application No. |
|---|---|
| | PCT/JP2017/030432 |

**A. CLASSIFICATION OF SUBJECT MATTER**
*F16J15/34*(2006.01)i

According to International Patent Classification (IPC) or to both national classification and IPC

**B. FIELDS SEARCHED**

Minimum documentation searched (classification system followed by classification symbols)
F16J15/34

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/129553 A1 (Eagle Kogyo Co., Ltd.), 18 August 2016 (18.08.2016), claims; fig. 1 to 2 (Family: none) | 1–6 |
| A | Microfilm of the specification and drawings annexed to the request of Japanese Utility Model Application No. 35168/1988(Laid-open No. 158853/1989) (Eagle Kogyo Co., Ltd.), 02 November 1989 (02.11.1989), specification, page 5, line 11 to page 7, line 10; fig. 2 (Family: none) | 1–6 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 October 2017 (26.10.17) | 07 November 2017 (07.11.17) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2017/030432

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2013-242047 A  (Eagle Kogyo Co., Ltd.), 05 December 2013 (05.12.2013), paragraph [0030]; fig. 3 & US 2009/0200749 A1 paragraph [0068]; fig. 3 | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11287329 A
- JP 2000169266 A